# EUROPÄISCHE PATENTSCHRIFT

(11) **EP 1 651 898 B1**
(45) Veröffentlichungstag und Bekanntmachung des Hinweises auf die Patenterteilung: **02.05.2007**
(21) Anmeldenummer: 04762399.6
(22) Anmeldetag: 15.07.2004
(51) Int. Cl.: F16L 11/10, F16L 11/11, F16L 11/115, B29C 45/16

(54) **ROHR ZUR FÜHRUNG VON GAS BZW. FLÜSSIGKEIT**
TUBE FOR GUIDING GAS OR LIQUID
TUYAU DESTINE A L'ACHEMINEMENT DE GAZ OU DE LIQUIDE

(30) Priorität: 05.08.2003 DE 10336622
(43) Veröffentlichungstag der Anmeldung: 03.05.2006
(73) Patentinhaber: MAHLE Filtersysteme GmbH, 70376 Stuttgart (DE)
(72) Erfinder: LAWRENCE, Ian, Exter, Devon EX4 2NY (GB)
(74) Vertreter: Patentanwalts-Partnerschaft Rotermund + Pfusch + Bernhard
(86) Internationale Anmeldenummer: PCT/DE2004/001544
(87) Internationale Veröffentlichungsnummer: WO 2005/015070

(56) Entgegenhaltungen:
- EP-A- 0 805 299
- DE-A- 2 943 699
- DE-U- 7 403 631
- US-A- 5 439 035
- US-A- 5 975 144
- US-A1- 2003 079 790
- US-B1- 6 494 496

## Beschreibung

Die vorliegende Erfindung betrifft ein Rohr zur Führung von Gas und/oder Flüssigkeit, insbesondere an einer Brennkraftmaschine. Dokument EP 0 805 299 A1 zeigt ein Rohr nach dem Oberbegriff von Anspruch 1.

Bei einer Vielzahl technischer Anwendungen ist es erforderlich, ein Gas oder eine Flüssigkeit von einem ersten Bauteil zu einem zweiten Bauteil zu transportieren. Insbesondere bei Brennkraftmaschinen, zumindest wenn sie in einem Kraftfahrzeug angeordnet sind, können im Betrieb Relativbewegungen, wie z.B. Vibrationen, Schwingungen und thermische Ausdehnungseffekte, zwischen den mit Hilfe des Rohrs miteinander verbundenen Bauteilen auftreten. Damit es hierbei nicht zu einer Zerstörung des Rohrs kommt, muss das Rohr entsprechend flexibel ausgestaltet sein. Beispielsweise kann das Rohr als Wellschlauch oder als Faltenbalg ausgebildet sein, um die erforderliche Flexibilität aufzuweisen. Besondere Schwierigkeiten ergeben sich darüber hinaus dann, wenn das Rohr außerdem druckstabil sein muss, also wenn zwischen Rohrinnenseite und Rohraußenseite eine Druckdifferenz herrscht. Hier treffen somit entgegengesetzt wirkende Materialanforderungen aufeinander, da zur Erzielung einer Druckstabilität ein möglichst steifes Material benötigt wird, während zur Erzielung der gewünschten Flexibilität ein möglichst biegeweiches Material erforderlich ist.

Zur Herstellung eines derartigen Faltenbalgs werden somit vergleichsweise teurere, gummiähnliche Werkstoffe benötigt, wodurch herkömmliche Rohre dieser Art vergleichsweise teuer sind.

Die vorliegende Erfindung beschäftigt sich mit dem Problem, für ein Rohr der eingangs genannten Art eine verbesserte Ausführungsform anzugeben, die insbesondere besonders preiswert herstellbar ist.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Rohr aus zwei miteinander verbundenen Körpern, nämlich aus einem Stützkörper und aus einer Haut, aufzubauen, wobei der Stützkörper an sich aus einem steifen ersten Kunststoff besteht, jedoch so geformt ist, das der Stützkörper die gewünschte Flexibilität besitzt, und wobei die Haut den Stützkörper für die gewünschte Strömungsführung entsprechend den jeweiligen Anforderungen hinreichend abdichtet.

Für die Haut wird dabei gezielt ein zweiter Kunststoff verwendet, der hinreichend flexibel ist, um den Relativbewegungen, welche der Stützkörper aufgrund seiner Formgebung ermöglicht, folgen zu können.

Durch den erfindungsgemäßen Vorschlag wird eine funktionale Trennung erreicht, bei welcher der Stützkörper für die erforderliche Druckstabilität des Rohr sorgt, während die Haut die jeweils gewünschte Dichtigkeit des Rohrs bewirkt.

Durch die Auftrennung der beiden Funktionen auf zwei verschiedene Körper, können die beiden Körper hinsichtlich ihrer Werkstoffe für die jeweils zugemessene Funktion optimiert werden.

Die funktionale Trennung ermöglicht es außerdem, die Haut mit einer relativ kleinen Materialstärke auszugestalten, wodurch weniger zweiter Kunststoff benötigt wird. Dies ergibt einen zusätzlichen Kostenvorteil, da der zur Herstellung der flexiblen Haut benötigte zweite Kunststoff in der Regel vergleichsweise teuer ist. Beispielsweise kann für die Haut im Grunde der selbe Kunststoff verwendet werden, mit dem herkömmlichen Faltenbalge hergestellt werden.

Von besonderem Vorteil ist dabei eine Ausführungsform, bei welcher der eine Körper an den anderen Körper angespritzt wird. Hierdurch ergibt sich eine besonders preiswerte und automatisierte Herstellung des Rohrs.

Von Bedeutung ist eine Ausführungsform, bei welcher beide Körper als Spritzgussteile ausgebildet sind und innerhalb eines einzigen Spritzgusswerkzeuges mit Hilfe von zwei aufeinander folgenden Spritzgussschüssen erzeugt werden. Mit dem zweiten Schuss wird somit gleichzeitig das Rohr ausgebildet. Da Spritzgussteile besonders preiswert herstellbar sind, kann auch das erfindungsgemäße Rohr auf diese Weise günstig hergestellt werden.

Bevorzugt wird eine Ausführungsform, bei welcher die Haut den Stützkörper zumindest im Bereich eines flexiblen Längsabschnitts von innen und/oder von außen vollständig umhüllt. Bei dieser Bauform bildet die Haut eine mehr oder weniger Gas- bzw. Flüssigkeitsdichte Innen- bzw. Außenhülle, die sich am Stützkörper abstützt. Bei dieser Bauweise kann eine gewünschte, mehr oder weniger wirksame Abdichtung des Rohrs relativ einfach erreicht werden.

Ein weiterer Vorteil des Spritzgießens der beiden Körper wird darin gesehen, dass es dadurch besonders einfach möglich ist, am Rohr zusätzliche Anschlüsse durch eine entsprechende Ausformung des Stützkörper und/oder der Haut herzustellen. Darüber hinaus können am Stützkörper unabhängig von der Haut zusätzliche Dichtungen angespritzt werden, wobei sich hierzu der zweite Kunststoff in besondere Weise eignet, so dass es insbesondere möglich ist, die genannten Dichtungen gleichzeitig, also im gleichen Spritzgussschuss mit der Haut zu erzeugen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine perspektivische Ansicht auf ein erfindungsgemäßes Rohr,
- Fig. 2: eine Seitenansicht auf das Rohr gemäß Fig. 1,
- Fig. 3: einen Längsschnitt durch das Rohr entsprechend den Schnittlinien III in Fig. 2,
- Fig. 4: einen Querschnitt durch das Rohr entsprechend den Schnittlinien IV in Fig. 2,
- Fig. 5: eine Detailansicht auf das Detail V in Fig. 3,
- Fig. 6: eine Seitenansicht wie in Fig. 2, jedoch bei einem nicht erfindungsgemäßen Rohr,
- Fig. 7: eine perspektivische Ansicht auf einen Teilbereich im Längsschnitt des Rohrs aus Fig. 6.

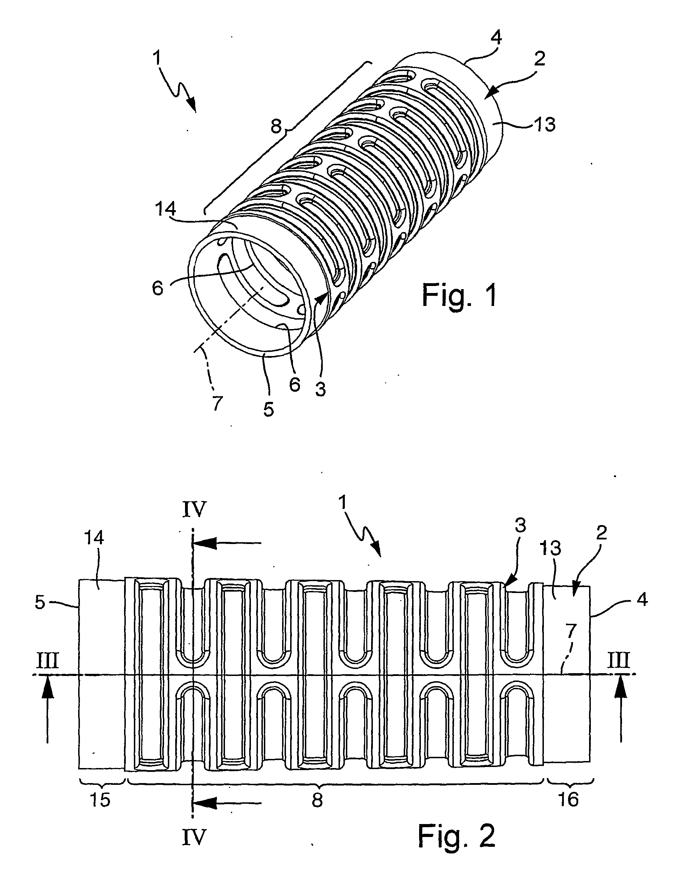

Entsprechend den Fig. 1 bis 3 weist ein erfindungsgemäßes Rohr 1 einen Stützkörper 2 und eine Haut 3 auf. Das Rohr 1 dient zur Führung von Gas und kann dementsprechend gasdicht ausgestaltet werden. Ebenso kann das Rohr 1 flüssigkeitsdicht ausgebildet sein, so dass es auch zur Führung von Flüssigkeiten geeignet ist. Bei bestimmten Anwendungen muss das Rohr 1 nicht vollständig gasdicht sein, so dass eine gewisse Gasdurchlässigkeit erwünscht sein kann, beispielsweise um Druckimpulse durch die Rohrwandung nach außen austreten zu lassen. Hierdurch kann das Rohr 1 z.B. gegenüber Luftschall als Dämpfer dienen. Das Rohr 1 besitzt zwei Enden 4 und 5, an denen das Rohr 1 an entsprechende Stutzen oder Anschlüssen von Bauteilen angeschlossen werden kann, die mit Hilfe des Rohrs 1 zur Übertragung eines Gases oder einer Flüssigkeit miteinander verbunden werden sollen.

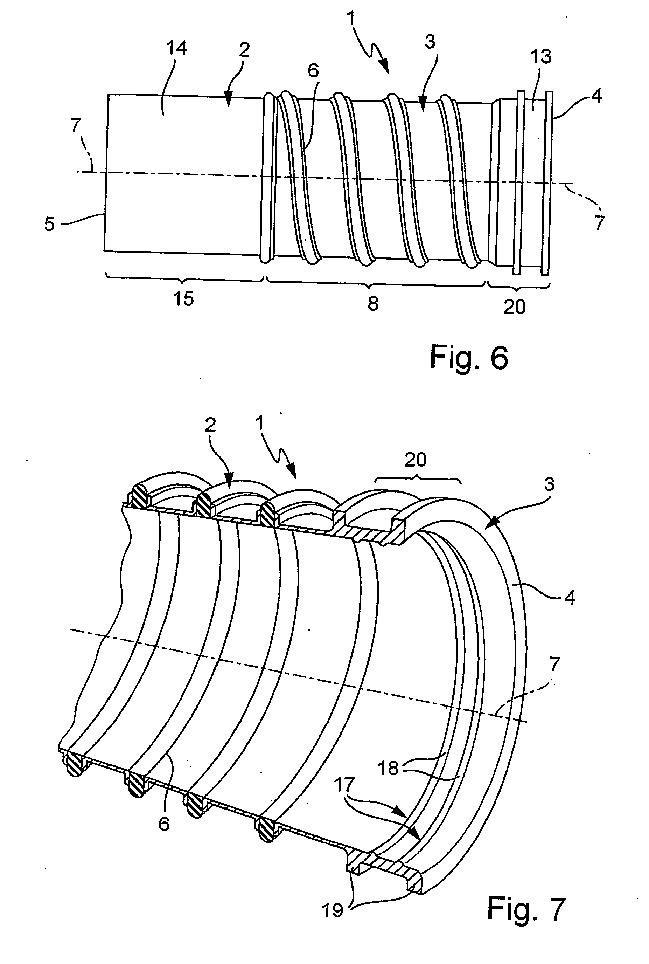

Der Stützkörper 2 besteht aus einem ersten Kunststoff, der relativ steif ist. Beispielsweise ist der erste Kunststoff PP (Polypropylen). Erfindungsgemäß ist der Stützkörper 2 mit einer Aussparung 6 oder mit mehreren Aussparungen 6 ausgestattet. Bei der ersten Ausführungsform gemäß den Fig. 1 bis 5 ist der Stützkörper 2 mit mehreren derartiger Aussparungen 6 versehen, während bei der Variante gemäß Fig. 6 und 7 nur eine solche Aussparung 6 vorgesehen ist. Jede Aussparung 6 durchdringt den Stützkörper 2 quer zur Längsrichtung des Rohrs 1. Die Längsrichtung ist in den Fig. mit 7 bezeichnet.

Die Anordnung, Gestaltung und Verteilung der Aussparungen 6 erfolgt gezielt so, dass sich entlang des Stützkörpers 2 zumindest ein Längsabschnitt 8 ausbildet, der in den Fig. durch eine geschweifte Klammer gekennzeichnet ist und im folgenden als flexibler Längsabschnitt 8 bezeichnet wird. In diesem flexiblen Längsabschnitt 8 ist der Stützkörper 2 durch die gewählte Verteilung und Dimensionierung der Aussparungen 6 flexibel, d.h. das Rohr 1 kann im flexiblen Längsabschnitt 8 reversibel gekrümmt und/oder bezüglich einer quer zur Längsrichtung 7 verlaufenden Achse gebogen werden. Desweiteren kann das Rohr 1 bei den hier gezeigten Ausführungsformen zusätzlich in seiner Längsrichtung.7 reversibel gestaucht und auseinander gezogen werden. Von entscheidener Bedeutung ist hierbei, dass der Stützkörper 2, insbesondere auch im flexiblen Längsabschnitt 8, einen im wesentlichen formstabilen Querschnitt besitzt, so dass der Stützkörper 2 auch im flexiblen Längsabschnitt 8 Druckkräfte abstützen kann, die im bestimmungsgemäßen Gebrauch des Rohrs 1 an einer Rohrinnenseite und/oder an einer Rohraußenseite angreifen. Der Stützkörper 2 besitzt somit eine druckstabile Struktur, die es dem Rohr 1 ermöglicht, Fluide zu transportieren, in denen relativ zur Umgebung des Rohrs 1 ein Überdruck oder ein Unterdruck herrscht.

Die vorstehende Formulierung "im wesentlichen formstabiler Querschnitt" deutet darauf hin, dass geringfügige Querschnittsänderungen beim zulässigen Biegen oder Krümmen des Rohrs 1 unvermeidbar sind. Der druckstabile Querschnitt behält insoweit seine Form, dass sich beim Krümmen oder Biegen des Rohrs 1 kein merklicher Anstieg im Durchströmungswiderstand ergibt.

Im Unterschied dazu besteht die Haut 3 aus einem zweiten Kunststoff, der relativ biegeweich ist. Beispielsweise wird für den zweiten Kunststoff TPE (thermoplastische Elastomere) verwendet. Die Begriffe "relativ steif" und "relativ biegeweich" sollen im vorliegenden Zusammenhang lediglich zum Ausdruck bringen, dass der erste Kunststoff steifer ist als der zweite Kunststoff bzw. dass der zweite Kunststoff biegeweicher ist als der erste Kunststoff.

Die Haut 3 ist erfindungsgemäß am Stützkörper 2 so angebracht bzw. angeordnet, dass sie die wenigstens eine Ausnehmung 6 des Stützkörpers 2 verschließt bzw. vollständig ausfüllt. Sofern es sich beim zweiten Kunststoff um einen dichten Kunststoff handelt, werden die Ausnehmungen dadurch dicht verschlossen. Gleichzeitig erfolgt die Anordnung der Haut 3 am Stützkörper 2 so, dass die Haut 3 Druckkräfte auf den Stützkörper 2 übertragen kann. Derartige Druckkräfte können - wie oben erwähnt - im Gebrauch des Rohrs 1 an der Rohrinnenseite bzw. an der Rohraußenseite auftreten, wodurch sie im Bereich der wenigstens einen Ausnehmung 6 an der Haut 3 angreifen. Der zweite Kunststoff ist so gewählt, dass die Haut 3 im flexiblen Längsabschnitt 8 zum einen die Flexibilität des Stützkörpers 2 nicht behindert. Zum anderen ist die Haut 3 durch die Werkstoffwahl soweit dehnbar, dass er gerade im Bereich der wenigsten einen Aussparung 6 den Bewegungen und Verformungen des Stützkörpers 2 im flexiblen Längsabschnitt 8 folgen kann, ohne dass dabei die jeweils gewünschte Dichtwirkung der Haut 3 verloren geht. Die Anbindung und/oder die Anbringung der Haut 3 am Stützkörper 2 erfolgt so, dass die gewünschte Druckkraftübertragung von der Haut 3 auf den Stützkörper 2 ermöglicht wird.

Bei der in den Fig. 1 bis 5 gezeigten ersten Ausführungsform ist die Haut 3 so gestaltet, dass sie den Stützkörper 2 im Bereich des flexiblen Längsabschnitts 8 außen, also an der Rohraußenseite vollständig umhüllt. Diese Variante eignet sich in besonderer Weise für Anwendungen, bei denen im Rohr 1 ein Unterdruck herrscht. Die Druckdifferenz presst die Haut 3 dabei von außen gegen den Stützkörper 2, was die Dichtwirkung unterstützt. Gleichzeitig werden dabei Befestigungen, die zwischen den Körpern 2, 3 vorgesehen sein können, z.B. eine Adhäsionsverbindung, bei dieser Anordnung nicht belastet. Bei einem Rohr 1, in dem im Betrieb ein Überdruck herrscht, ist es daher zweckmäßig, die Haut 3 im Inneren des Stützkörpers 2 anzuordnen, und zwar so, dass die Haut 3 den flexiblen Längsabschnitt nunmehr von Innen, also an der Rohrinnenseite vollständig umhüllt. Der herrschende Überdruck presst dann die Haut 3 nach außen gegen den Stützkörper 2. Grundsätzlich sind auch Ausführungsformen möglich, bei denen die Haut 3 so am Stützkörper 2 angebracht wird, dass der Stützkörper 2 im flexiblen Längsabschnitt 8 sowohl innen als auch außen von der Haut 3 vollständig umhüllt ist.

Da die Haut 3 die daran angreifenden Druckkräfte über eine insgesamt relativ große Auflagefläche oder Verbindungsfläche auf den Stützkörper 2 übertragen kann, kann die Haut 3 mit einer vergleichsweise geringen Materialstärke hergestellt werden. Insbesondere ist die Wandstärke der Haut 3 etwa halb so groß wie die Wandstärke des Stützkörpers 2.

Bei der in den Fig. 1 bis 5 gezeigten Ausführungsform wird die Flexibilität des Stützabschnitts 2 im flexiblen Längsabschnitt 8 dadurch erreicht, dass der Stützkörper 2, der durch die Anordnung der Aussparungen 6 im flexiblen Längsabschnitt 8 noch verbleibt, ein Skelett bildet, das quasi kardanisch beweglich oder biegsam oder flexibel ist. Der Begriff "kardanisch" bezieht sich im vorliegenden Fall auf die im flexiblen Längsabschnitt geschaffene Beweglichkeit, die zwei bevorzugte Biegeachsen besitzt, um welche das Rohr 1 krümmbar oder biegbar ist, wobei diese beiden Biegeachse senkrecht zueinander und senkrecht zur Längsachse 7 des Rohrs 1 verlaufen. Dies entspricht im übertragene Sinne einem Kardangelenk, das zwei senkrecht zueinander und senkrecht zu einer Drehachse verlaufenden Gelenkachsen besitzt.

Die kardanische Flexibilität im flexiblen Längsabschnitt 8 wird bei der hier gezeigten Ausführungsform dadurch erreicht, dass der Stützkörper 2 im flexiblen Längsabschnitt 8 mehrere Ringe 9 aufweist, die in der Längsrichtung 7 des Rohrs 1 nebeneinander angeordnet sind und die außerdem koaxial zur Längsrichtung 7 ausgerichtet sind. Desweiteren sind jeweils zwei benachbarte Ringe 9 über zwei Stege 10 miteinander verbunden. Die derselben Ringpaarung zugeordneten Stege 10 liegen sich dabei diametral gegenüber und erzeugen dadurch einen sich in Längsrichtung 7 erstreckenden Abstand zwischen den benachbarten Ringen 9. Durch diese Beabstandung entstehen die Aussparungen 6.

Besonders wichtig für die Erzeugung der gewünschten Beweglichkeit ist außerdem, dass jeweils bei drei in Längsrichtung 7 aufeinander folgenden Ringen 9 die beiden Stege 10, durch die der jeweils mittlere Ring 9 mit dem einen benachbarten Ring 9 verbunden ist, um 90° um die Längsachse 7 gegenüber den beiden Stegen 10 gedreht angeordnet ist, durch die der jeweilige mittlere Ring 9 mit dem anderen benachbarten Ring 9 verbunden ist. Die in Längsrichtung 7 aufeinander folgenden Stegpaare sind somit jeweils zueinander um 90° versetzt. Aufgrund der Elastizität des an sich steifen ersten Kunststoff ermöglicht jeder einzelne Ring 9 eine relativ kleine elastische Biegeverformung, wobei über die Anzahl der Ringe 9 innerhalb des flexiblen Längsabschnitts 8 eine vergleichsweise große flexible Verformbarkeit für den Stützkörper 2 somit für das Rohr 1 erzielbar ist. Desweiteren ermöglicht die hier gezeigte spezielle Ausgestaltung des Stützkörpers 2 auch die elastische Aufnahme von Stauchungen und Streckungen parallel zur Längsrichtung 7.

Eine Besonderheit wird bei dieser Ausführungsform noch darin gesehen, dass der Stützkörper 2 im flexiblen Längsabschnitt 8 einen vergleichsweise großen Widerstand gegen Drehmomentbelastungen zeigt. Diese Eigenschaft kann für bestimmte Anwendungsformen von Vorteil sein.

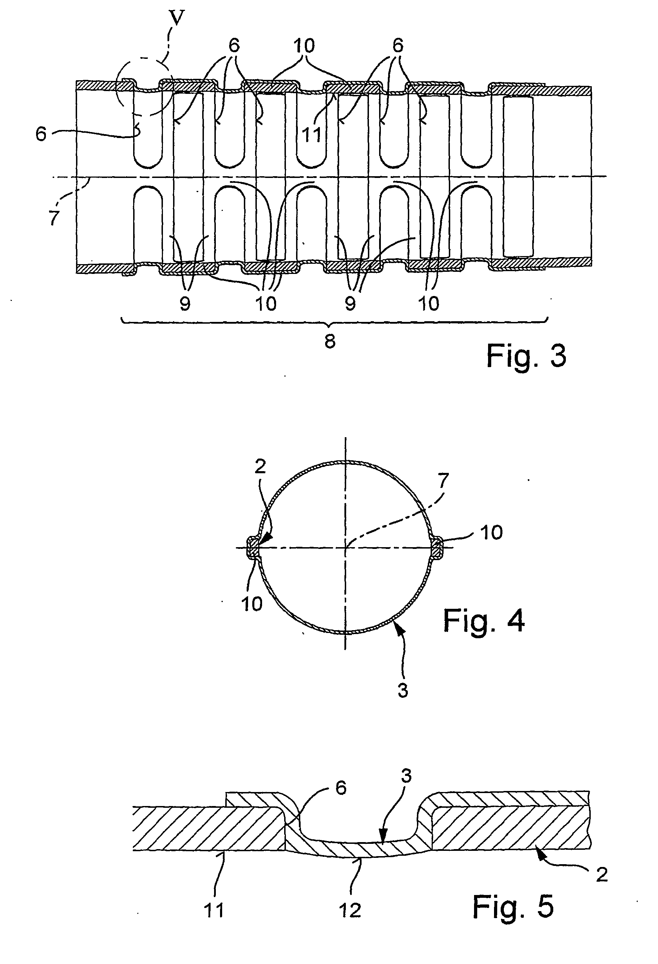

Wie den Fig. 1 bis 5 entnehmbar ist, folgt die Haut 3 der Kontur des Stützkörpers 2. Hierdurch kann über die gesamte Erstreckung der Haut 3 die erwünschte relativ niedrige Materialstärke beibehalten werden. Wie insbesondere aus den Fig. 3 und 5 hervorgeht, kann die von außen aufgebrachte Haut 3 zweckmäßig so angeordnet werden, dass sie von außen von soweit in die Aussparungen 6 hineinragt, dass eine Innenseite 11 des Stützkörpers 2 im wesentlichen bündig mit einer Innenseite 12 der Haut 3 abschließt. Hierdurch lässt sich im Rohr 1 eine im wesentlichen glatte Innenkontur generieren, was den Durchströmungswiderstand des Rohrs 1 erheblich reduziert. Dies ist ein gravierender Vorteil gegenüber herkömmlichen Rohren, die beispielsweise als Faltenbalg oder Wellschlauch ausgebildet sind.

Alternativ ist auch eine Ausführungsform möglich, bei welcher die Haut 3 aus einer Vielzahl von Teilkörpern besteht, die jeweils die einzelnen Aussparungen 6 separat verschließen. Der Fertigungsaufwand zur Erzielung einer bleibenden und hinreichenden Abdichtung ist jedoch erheblich größer als bei der hier gezeigten einstückigen oder einteiligen Bauweise der Haut 3.

Im Unterschied zu dem erfindungsgemäßen Rohr gemäß den Fig. 1 bis 5 zeigt das nicht erfindungsgemäße Rohr der Fig. 6 und 7 einen Stützkörper 2, der nur eine einzige Ausnehmung 6 aufweist, die sich im flexiblen Längsabschnitt 8 spiralförmig erstreckt. Automatisch besitzt der im flexiblen Längsabschnitt 8 verbleibende Rest des Stützkörpers 2 dann ebenfalls eine Spiralform. Der im flexiblen Längsabschnitt 8 spiralförmige Stützkörper 2 besitzt aufgrund seiner Spiralform automatisch eine dreidimensionale Flexibilität, wobei hierzu zusätzlich auch Drehmomente flexibel aufgenommen werden können. Die Haut 3 ist wieder so geformt und angebracht, dass sie die spiralförmige Aussparung 6 vollständig, ausfüllt und insbesondere dicht verschließt. Im vorliegenden Fall ist die Haut 3 ebenfalls spiralförmig aufgebaut, was besonders deutlich aus Fig. 7 hervorgeht. Alternativ ist es auch möglich, die Haut 3 wieder so zu gestalten, dass sie zumindest innerhalb des flexiblen Längsabschnitts 8 den Stützkörper 2, also hier die Windungen der Spirale innen und/oder außen vollständig umhüllt.

Obwohl hier für den Stützkörper 2 und die Haut 3 jeweils nur eine Einfach-Spirale gezeigt ist, können die Körper 2, 3 im flexiblen Längsabschnitt 8 auch nach Art einer Doppel-Spirale oder Mehrfach-Spirale ausgeformt sein.

Um das Rohr 1 möglichst preiswert herzustellen zu können, ist wenigstens einer der Körper 2, 3 als Spritzgussteil konzipiert, das zweckmäßig an den anderen Körper 2, 3 angespritzt wird. Dabei ist die Variante, bei welcher die Haut 3 an den zuvor hergestellten Stützkörper 2 angespritzt wird, preiswerter realisierbar.

Durch das Anspritzen des einen Körpers 2, 3 an den anderen Körper 2, 3 können besonders einfach formschlüssige Verbindungen zwischen den beiden Körpern 2, 3 erreicht werden. Darüber hinaus können auch stoffschlüssige Anbindungen zwischen den beiden Körpern 2, 3 durch das Anspritzen erzeugt werden. Beispielsweise kann der nachträglich angespritzte Kunststoff die Oberfläche des zuvor hergestellten Kunststoffkörpers 2, 3 an- oder aufschmelzen, wodurch sich eine Fusionsverbindung zwischen den beiden Körpern 2, 3 ausbildet. Eine derartige stoffschlüssige Anbindung ist besonders fest und dicht und kann insbesondere nicht zerstörungsfrei aufgehoben werden. Desweiteren ist es grundsätzlich auch möglich, die Kunststoffe so aufeinander abzustimmen, dass sich nach dem Anspritzen eine adhäsive Wirkung zwischen den beiden Kunststoffen ausbildet, wodurch sich ebenfalls eine effektive Fixierung der beiden Körper 2, 3 aneinander ergibt.

Für die Haut 3 und für den Stützkörper 2 wird jeweils eine einteilige Ausführungsform bevorzugt, was die Herstellung vereinfacht und preiswerter gestaltet.

Die Herstellung des Rohrs 1 erfolgt erfindungsgemäß wie folgt:

Mittels eines ersten Spritzgussschusses wird einer der Körper 2, 3, vorzugsweise der Stützkörper 2, hergestellt. Mit einem nachfolgenden zweiten Spritzgussschuss wird dann der andere Körper 2, 3, also zweckmäßig die Haut 3, direkt am zuvor hergestellten Körper 2, 3 hergestellt. Besonders vorteilhaft ist dabei eine Weiterbildung, bei welcher kein Werkzeugwechsel durchgeführt werden muss. D.h. die beiden Spritzgussschüsse werden im gleichen Spritzgusswerkzeug durchgeführt, das eine variable Form besitzt, die zwischen den Spritzgussschüssen verändert werden kann.

Bei der in den Fig. 1 bis. 5 gezeigten erfindungsgemäßen Ausführungsform weist das Rohr 1 an seinen Enden 4, 5 jeweils einen Endabschnitt 13 bzw. 14 auf. Diese Endabschnitte 13, 14 sind hier jeweils ein Bestandteil des Stützkörpers 2, der außerhalb des flexiblen Längsabschnitt 8 liegt. Die Endabschnitte 13, 14 sind dabei jeweils durch einen umfangsmäßig geschlossenen Abschnitt 15 bzw. 16 des Stützkörpers 2 gebildet. Die beiden Endabschnitte 13, 14 des Rohrs 1 können auch als Anschlüsse ausgebildet sein, mit deren Hilfe das Rohr 1 an dafür vorgesehene Bauteile anschließbar ist, um diese Bauteile über das Rohr 1 miteinander gasführend bzw. fluidführend miteinander zu verbinden. Diese Anschlüsse bzw. Endabschnitte 13, 14 können dann mit entsprechenden Befestigungsmitteln, insbesondere Flansche oder dergleichen ausgestattet sein. Hierdurch ergibt sich ein besonders hoher Integrationsgrad für den Stützkörper 2 bzw. für das Rohr 1, ohne dass dabei die Herstellungskosten wesentlich erhöht werden, da im Spritzgussverfahren ohne weiteres komplexe Formen gespritzt werden können.

Zwischen den beiden als Anschlüssen ausgebildeten Endabschnitten 13, 14 besitzt das Rohr 1 dann den flexiblen Längsabschnitt 8. Bei anderen Ausführungsformen des Rohrs 1 ist es grundsätzlich auch möglich, zwischen den Endabschnitten 13, 14 des Rohrs 1 zwei oder mehr derartige flexible Längsabschnitte 8 auszubilden, wobei dann zwischen in Längsrichtung 7 aufeinander folgenden flexiblen Längsabschnitten 8 im Stützkörper 2 ein umfangsmäßig geschlossener Abschnitt ausgebildet ist. Auf diese Weise ist es möglich, auch ein relativ komplex geformtes Rohr 1 lokal flexibel auszugestalten, wodurch eine optimale Anpassung des Rohrs 1 an den jeweiligen Anwendungsfall möglich ist.

Sofern ein derartiger Anschluss mit einer Dichtung versehen werden muss, kann diese Dichtung zweckmäßig aus dem zweiten Kunststoff hergestellt werden, so dass es insbesondere möglich ist, diese Dichtung am jeweiligen Anschluss zusammen mit der Haut 3 an den Stützkörper 2 anzuspritzen. Diese Dichtung muss dabei keine direkte körperliche Verbindung mit der Haut 3 besitzen.

Bei dem in den Fig. 6 und 7 nicht erfindungsgemäßen Rohr ist der eine Endabschnitt 14 wieder durch einen umfangsmäßig geschlossenen Abschnitt 15 des Stützkörpers 2 gebildet. Im Unterschied dazu ist der andere Endabschnitt 13 bei diesem Rohr an der Haut 3 ausgebildet, so dass ein umfangsmäßig geschlossener Abschnitt 20 beim Rohr 1 gemäß den Fig. 6 und 7 ein Bestandteil der Haut 3 ist. Auch eine derartiges Rohr kann vorteilhaft sein, beispielsweise dann, wenn das Rohr 1 an diesem Endabschnitt 13 auf einen an sich steifen Stutzen aufgesteckt werden muss. Beispielsweise kann an diesem Endabschnitt 13 an der Innenseite der Haut 3 eine Dichtungsanordnung 17, bestehend aus zwei ringförmigen Radialdichtungen 18 angeformt werden. Desweiteren können an diesem Endabschnitt 13 beispielsweise zwei umlaufende Kragen 19 ausgeformt werden, in bzw. zwischen denen z.B. eine Schelle positionierbar ist, mit deren Hilfe der jeweilige Endabschnitt 13, z.B. an einem Stutzen festlegbar ist. Auf diese Weise sind zusätzliche Komponenten, wie z.B. die Kragen 19 und die Dichtungen 18 integral an der Haut 3 ausgebildet bzw. ausgeformt.

Darüber hinaus ist es grundsätzlich möglich, am Stützkörper 2 an einer geeigneter Stelle, insbesondere in Längsrichtung 7 vom flexiblen Längsabschnitt 8 beabstandet, zumindest einen weiteren seitlichen Anschluss integral auszuformen. Beispielsweise kann über einen derartigen Anschluss oder Abzweig bei einem Rohr 1, das in einem Saugtrakt einer Brennkraftmaschine zum Einsatz kommt, Frischluft für einen Fahrzeuginnenraum abgezweigt werden. Sofern ein derartiger seitlichen Anschluss ebenfalls mit einer Dichtung ausgestattet werden soll, kann diese Dichtung zweckmäßig wieder mit Hilfe des zweiten Kunststoffes hergestellt werden, wobei dies insbesondere gleichzeitig mit dem Anspritzen der Haut 3 realisiert wird.

Das erfindungsgemäße Rohr 1 eignet sich in besonderer Weise für die Verwendung an einer Brennkraftmaschine, die in einem Kraftfahrzeug angeordnet ist. Dort kann das Rohr 1 zur Übertragung von Frischluft verwendet werden, so dass das Rohr 1 im Saugtrakt der Brennkraftmaschine angeordnet ist. Beim Rohr 1 handelt es sich dann um ein Saugrohr. Die Flexibilität des Rohrs 1 im flexiblen Längsabschnitt 8 ermöglicht dabei Relativbewegungen zwischen den über das Rohr 1 miteinander verbundenen Komponenten des Saugtrakts. Die im Betrieb des Fahrzeugs auftretenden Vibrationen, Schwingungen, Stöße, können vom Rohr 1 flexibel aufgenommen werden. Insoweit ermöglicht das Rohr 1 auch eine Entkopplung von Körperschall. Desweiteren lässt sich das erfindungsgemäße Rohr 1 besonders preiswert herstellen, da nur eine geringe Menge des zweiten Kunststoffs benötigt wird. Der zweite Kunststoff ist vergleichsweise teuer, da er in der Regel als Lebensdauerteil ausgelegt ist und dabei aufgrund der in einem Motorraum herrschenden rauhen Umgebungsbedingungen eine dauerhafte Kraftstoff-, Öl- und Temperaturbeständigkeit aufweisen und dabei gleichzeitig für eine lange Lebenszeit seine Biegeelastizität und Flexibilität gewährleisten muss. Desweiteren kann das erfindungsgemäße Rohr 1 die im Saugtrakt im Betrieb der Brennkraftmaschine auftretenden Unterdrücke sicher abstützen.

Falls das Rohr 1 gasdicht bzw. flüssigkeitsdicht sein soll, wird der zweite Kunststoff für die Haut 3 entsprechend gewählt. Ein dichtes Rohr 1 wird beispielsweise auf der Reinseite des Saugtrakts benötigt. Falls es auf eine hochwertige Dichtigkeit nicht ankommt, kann die Haut 3 auch mehr oder weniger gasdurchlässig ausgestaltet werden. Hierzu eignet sich beispielsweise die Verwendung eines entsprechenden gasdurchlässigen zweiten Kunststoffs und/oder eine entsprechende Perforation der Haut 3. Ein gasdurchlässiges Rohr 1 kann beispielsweise auf der Rohseite des Saugtrakt zu Anwendung kommen. Die Gasdurchlässigkeit ermöglicht dabei insbesondere den Durchtritt von Druckimpulsen durch die Rohrwandung, wodurch eine Bedämpfung von Luftschall ermöglicht wird. Beispielsweise wird das Rohr 1 außen mit einer Schaumstoffschicht umhüllt.

## Patentansprüche

1. Rohr zur Führung von Gas und/oder Flüssigkeit, insbesondere an einer Brennkraftmaschine,
- mit einem Stützkörper (2), der aus einem relativ steifen ersten Kunststoff besteht und eine Aussparung (6) oder mehrere Aussparungen (6) aufweist, die den Stützkörper (2) quer zur Längsrichtung (7) durchdringt/durchdringen und so angeordnet ist/sind, dass der Stützkörper (2) in einem mit der Aussparung (6)/den Aussparungen (6) versehenen Längsabschnitt (8) flexibel ist und im Gebrauch des Rohrs (1) an einer Rohrinnenseite und/oder an einer Rohraußenseite angreifende Druckkräfte abstützt,
- mit einer Haut (3), die aus einem relativ biegeweichen zweiten Kunststoff besteht und so am Stützkörper (2) angeordnet ist, dass sie die Ausnehmung (6) oder die Ausnehmungen (6) verschließt und im Gebrauch des Rohrs (1) an der Haut (3) angreifenden Druckkräfte auf den Stützkörper (2) überträgt,
- wobei die Haut (3) an den Stützkörper (2) angespritzt ist oder umgekehrt,
**dadurch gekennzeichnet,**
- **dass** die Haut (3) den Stützkörper (2) zumindest im Bereich des flexiblen Längsabschnitts von innen und/oder von außen vollständig umhüllt,
- **dass** das Rohr (1) zwei als Anschlüsse ausgebildete Endabschnitte (13, 14) aufweist, die jeweils durch einen umfangsmäßig geschlossenen Abschnitt (15, 16) des Stützkörpers (2) gebildet sind und zwischen denen wenigstens ein flexibler Längsabschnitt (8) des Stützkörpers (2) angeordnet ist.

2. Rohr nach Anspruch 1,
**dadurch gekennzeichnet,**
**dass** die Haut (3) mit dem Stützkörper (2) formschlüssig und/oder stoffschlüssig verbunden ist.

3. Rohr nach einem der Ansprüche 1 und 2,
**dadurch gekennzeichnet,**
- **dass** der Stützkörper (2) ein mit einem Schuss hergestelltes Spritzgussteil ist, und/oder
- **dass** die Haut (3) ein mit einem Schuss hergestelltes Spritzgussteil ist.

4. Rohr nach einem der Ansprüche 1 bis 3,
**dadurch gekennzeichnet,**
**dass** die Aussparungen (6) entlang des Rohrs (1) so verteilt angeordnet sind, dass der Stützkörper (2) zwei oder mehr flexible Längsabschnitte (8) aufweist, zwischen denen der Stützkörper (2) einen umfangsmäßig geschlossenen Abschnitt aufweist.

5. Rohr nach einem der Ansprüche 1 bis 4,
**dadurch gekennzeichnet,**
**dass** an wenigstens einem der aus dem ersten Kunststoff hergestellten Endabschnitte (15, 16) eine Dichtung (17) aus dem zweiten Kunststoff angebracht ist.

6. Rohr nach einem der Ansprüche 1 bis 5,
**dadurch gekennzeichnet,**
**dass** an der Haut (3) wenigstens eine Dichtung (18) integral ausgeformt ist.

7. Rohr nach einem der Ansprüche 1 bis 6,
**dadurch gekennzeichnet,**
**dass** am Stützkörper (2) wenigstens ein endseitiger oder seitlicher Anschluss integral ausgeformt ist, der eine aus dem zweiten Kunststoff hergestellte Dichtung aufweist.

8. Rohr nach einem der Ansprüche 1 bis 7,
**dadurch gekennzeichnet,**
- **dass** die Haut (3) einteilig ausgebildet ist, und/oder
- **dass** der Stützkörper (2) einteilig ausgebildet ist.

9. Rohr nach einem der Ansprüche 1 bis 8,
**dadurch gekennzeichnet,**
**dass** das Rohr (1) ein im Saugtrakt einer Brennkraftmaschine angeordnetes Saugrohr ist.

10. Rohr nach einem der Ansprüche 1 bis 9,
**dadurch gekennzeichnet,**
**dass** die Aussparungen (6) im flexiblen Längsabschnitt (8) des Stützkörpers (2) so angeordnet sind, dass der im flexiblen Längsabschnitt (8) verbleibende Stützkörper (2) ein kardanisch flexibles Skelett bildet.

11. Rohr nach einem der Ansprüche 1 bis 10,
**dadurch gekennzeichnet,**
- **dass** die Aussparungen (6) im flexiblen Längsabschnitt (8) des Stützkörpers (2) so angeordnet sind, dass der im flexiblen Längsabschnitt (8) verbleibende Stützkörper (2) koaxial zur Längsrichtung (7) des Rohrs (1) und in Längsrichtung (7) nebeneinander angeordnete Ringe (9) aufweist,
- **dass** benachbarte Ringe (9) jeweils durch zwei Stege (10), die sich diametral gegenüberliegen, miteinander verbunden sind,
- **dass** bei jedem Ring (9), der zwischen zwei benachbarten Ringen (9) angeordnet ist, die beiden mit dem einen benachbarten Ring (9) verbundenen Stege (10) um 90° gegenüber den beiden mit dem anderen benachbarten Ring (9) verbundenen Stege (10) versetzt angeordnet sind.

12. Rohr nach einem der Ansprüche 1 bis 11,
**dadurch gekennzeichnet,**
- **dass** die Haut (3) gasdurchlässig ausgebildet ist, oder
- **dass** die Haut (3) gasdicht ausgebildet ist und die Ausnehmung (6)/die Ausnehmungen (6) dicht verschließt.

## Claims

1. A pipe for carrying gas and/or fluid, in particular with an internal combustion engine,
- having a supporting body (2) which consists of a relatively rigid first plastic and has one recess (6) or multiple recesses (6) which pass through the supporting body (2) across the longitudinal direction (7) and are arranged so that the supporting body (2) is flexible in a longitudinal section (8) that is provided with the recess (6) or the recesses (6) and withstands compressive forces acting on the inside and/or outside of the pipe (1) during use of said pipe,
- having a membrane (3) consisting of a relatively soft flexible second plastic arranged on the supporting body (2) so that it seals the recess (6) or recesses (6) and transmits the compressive forces acting on the membrane (3) during use of the pipe (1) to the supporting body (2),
- the membrane (3) is integrally molded on the supporting body (2) or vice versa,
**characterized in that**
- the membrane (3) sheaths the supporting body (2) completely on the inside and/or outside at least in the area of the flexible longitudinal section,
- the pipe (1) has two end sections (13, 14) designed as connections, each section being formed by a section (15, 16) of the supporting body (2) that is closed on the circumference, with at least one flexible longitudinal section (8) of the supporting body (2) being arranged between them.

2. The pipe according to Claim 1,
**characterized in that**
the membrane (3) is joined to the supporting body (2) in a form-fitting and/or integrally bonded manner.

3. The pipe according to Claim 1 or 2,
**characterized in that**
- the supporting body (2) is an injection-molded part produced in one step, and/or
- the membrane (3) is an injection-molded part produced in one step.

4. The pipe according to any one of Claims 1 through 3,
**characterized in that**
the recesses (6) are distributed along the pipe (1) in such a way that the supporting body (2) has two or more flexible longitudinal sections (8), between which the supporting body (2) has a section that is closed on the circumference.

5. The pipe according to any one of Claims 1 through 4,
**characterized in that**
a gasket (17) made of the second plastic is mounted on at least one of the end sections (15, 16) made from the first plastic.

6. The pipe according to any one of Claims 1 through 5,
**characterized in that**
at least one gasket (18) is integrally molded on the membrane (3).

7. The pipe according to any one of Claims 1 through 6,
**characterized in that**
at least one connection on the end or side is integrally molded on the supporting body (2), said connection having a gasket made of the second plastic.

8. The pipe according to any one of Claims 1 through 7,
**characterized in that**
- the membrane (3) is designed in one piece, and/or
- the supporting body (2) is designed in one piece.

9. The pipe according to any one of Claims 1 through 8,
**characterized in that**
the pipe (1) is a suction pipe situated in the intake tract of an internal combustion engine.

10. The pipe according to any one of Claims 1 through 9,
**characterized in that**
the recesses (6) are arranged in the flexible longitudinal section (8) of the supporting body (2), so that the supporting body (2) which remains in the flexible longitudinal section (8) forms a cardanically flexible skeleton.

11. The pipe according to any one of Claims 1 through 10,
**characterized in that**
- the recesses (6) are arranged in the flexible longitudinal section (8) of the supporting body (2) so that the supporting body (2) remaining in the flexible longitudinal section (8) has rings (9) arranged coaxially with the longitudinal direction (7) of the pipe (1) and side-by-side in the longitudinal direction,
- adjacent rings (9) are joined together by two webs (10) that are diametrically opposed,
- with each ring (9) that is arranged between two neighboring rings (9), the two webs (10) that are connected to the one neighboring ring (9) are arranged so they are offset by 90° with respect to the two webs (10) connected to the other neighboring ring (9).

12. The pipe according to any one of Claims 1 through 11,
**characterized in that**
- the membrane (3) is designed to be gas-permeable, or
- the membrane (3) is designed to be airtight and tightly seals the recess (6) or recesses (6).

## Revendications

1. Tuyau pour l'acheminement de gaz et/ou de liquide, en particulier sur un moteur à combustion interne,
- avec un corps d'appui (2), qui est constitué d'une première matière plastique relativement rigide et présente un évidement (6) ou plusieurs évidements (6), qui traverse/traversent le corps d'appui (2) transversalement à la direction longitudinale (7) et est/sont disposé/s de sorte que le corps d'appui (2) est flexible dans une section longitudinale (8), munie de l'évidement (6)/des évidements (6), et supporte des forces de pression agissant en cours d'utilisation du tuyau (1) sur un côté intérieur et/ou un côté extérieur du tuyau,
- avec une peau (3), qui est composée d'une seconde matière plastique relativement souple en flexion et est disposée sur le corps d'appui (2) de sorte qu'elle ferme l'évidement (6) ou les évidements (6) et que des forces de pression, agissant sur la peau (3), sont transmis en cours d'utilisation du tuyau (1) au corps d'appui (2),
- la peau (3) étant injectée sur le corps d'appui (2) ou inversement,
**caractérisé en ce que**
- la peau (3) gaine totalement de l'intérieur et/ou de l'extérieur le corps d'appui (2), au moins dans la zone de la section longitudinale flexible,
- le tuyau (1) comporte deux sections extrêmes (13, 14) réalisées sous forme de raccords, qui sont formées chacune par une section (15, 16), fermée sur son pourtour, du corps d'appui (2) et entre lesquelles est disposée au moins une section longitudinale flexible (8) du corps d'appui (2).

2. Tuyau suivant la revendication 1, **caractérisé en ce que** la peau (3) est assemblée par coopération de forme et/ou alliance de matière avec le corps d'appui (2).

3. Tuyau suivant l'une des revendications 1 et 2, **caractérisé en ce que**
- le corps d'appui (2) est une pièce moulée par injection fabriquée par une charge d'injection, et/ou
- la peau (3) est une pièce moulée par injection fabriquée par une charge d'injection.

4. Tuyau suivant l'une des revendications 1 à 3, **caractérisé en ce que** les évidements (6) sont répartis le long du tuyau (1) de sorte que le corps d'appui (2) présente deux sections longitudinales flexibles (8) ou plus, entre lesquelles le corps d'appui (2) présente une section fermée sur son pourtour.

5. Tuyau suivant l'une des revendications 1 à 4, **caractérisé en ce qu'**un joint d'étanchéité (17) en la seconde matière plastique est appliqué sur au moins l'une des sections extrêmes (15, 16) fabriquées en la première matière plastique.

6. Tuyau suivant l'une des revendications 1 à 5, **caractérisé en ce qu'**au moins un joint d'étanchéité (18) est mis en forme intégralement sur la peau (3).

7. Tuyau suivant l'une des revendications 1 à 6, **caractérisé en ce qu'**au moins un raccord du côté extrême ou latéral est mis en forme intégralement sur le corps d'appui (2), lequel raccord présente un joint d'étanchéité fabriqué en la seconde matière plastique.

8. Tuyau suivant l'une des revendications 1 à 7, **caractérisé en ce que**
- la peau (8) est réalisée d'une seule pièce et/ou
- le corps d'appui (2) est réalisé d'une seule pièce.

9. Tuyau suivant l'une des revendications 1 à 8, **caractérisé en ce que** le tuyau (1) est un tuyau d'admission disposée dans le circuit d'admission d'un moteur à combustion interne.

10. Tuyau suivant l'une des revendications 1 à 9, **caractérisé en ce que** les évidements (6) dans la section longitudinale flexible (8) du corps d'appui (2) sont disposés de telle sorte que le corps d'appui (2), subsistant dans la section longitudinale flexible (8), forme un squelette flexible à la Cardan.

11. Tuyau suivant l'une des revendications 1 à 10, **caractérisé en ce que**
- les évidements (6) dans la section longitudinale flexible (8) du corps d'appui (2) sont disposés de telle sorte que le corps d'appui (2), subsistant dans la section longitudinale flexible (8), présente des bagues (9) disposées coaxialement par rapport à la direction longitudinale (7) du tuyau (1) et juxtaposées dans la direction longitudinale (7),
- des bagues voisines (9) sont respectivement assemblées entre elles par deux traverses (10), qui sont en vis-à-vis diamétral,
- pour chaque bague (9), disposée entre deux bagues voisines (9), les deux traverses (10) assemblées avec l'une des bagues (9) voisine sont disposées en déport de 90° par rapport aux deux traverses (10) assemblées avec l'autre bague voisine.

12. Tuyau suivant l'une des revendications 1 à 11, **caractérisé en ce que**
- la peau (3) a une réalisation perméable aux gaz, ou
- la peau (3) a une réalisation étanche aux gaz et ferme hermétiquement l'évidement (6)/les évidements (6).
